# EUROPEAN PATENT APPLICATION

(11) **EP 4 783 427 A1**
(43) Date of publication of application: **29.07.2026**
(21) Application number: 24867034.1
(22) Date of filing: 10.07.2024
(51) Int. Cl.: H02K 5/22, H02K 11/30, H02K 5/08, H02K 3/50

(54) **ELECTRIC MOTOR, WATER PUMP, AND VEHICLE**

(30) Priority: 18.09.2023 CN 202311207004
(71) Applicant: Anhui Welling Auto Parts Corporation Limited, Hefei, Anhui 230088 (CN); Anqing Welling Auto Parts Co., Ltd., Anqing, Anhui 246008 (CN); Guangdong Welling Auto Parts Corporation Limited, Foshan, Guangdong 528311 (CN)
(72) Inventor: FU, Wei, Hefei, Anhui 230088 (CN); ZHOU, Rongbin, Hefei, Anhui 230088 (CN); WANG, Dong, Hefei, Anhui 230088 (CN); ZHENG, Ziteng, Hefei, Anhui 230088 (CN); MA, Jun, Hefei, Anhui 230088 (CN)
(74) Representative: Ran, Handong
(86) International application number: PCT/CN2024/104750
(87) International publication number: WO 2025/060616

(57) **Abstract**

An electric motor (100), comprising: a stator assembly (1), which comprises a stator core (11), wherein the stator core is provided with an insulating framework (12), a coil winding (13) being wound on the insulating framework; a plurality of connector terminals (2), which are arranged on the end face of the insulating framework, each connector terminal being provided with an external connecting end (21), and at least some of the connector terminals being electrically connected to the coil winding; and a housing (3), which comprises a first portion (31) and a second portion (32) that are integrally formed, the first portion being wrapped around the stator assembly, and the second portion being wrapped around the plurality of connector terminals.

## Description

### CROSS-REFERENCE TO RELATED APPLICATION

This application claims a priority to Chinese Patent Application No. 202311207004.2, filed on September 18, 2023 and entitled "ELECTRIC MOTOR, WATER PUMP, AND VEHICLE", the entire disclosure of which is incorporated herein by reference.

### FIELD

The present disclosure relates to the technical field of motors, and in particular, to a motor, a water pump, and a vehicle.

### BACKGROUND

As the most common power source, motors are widely used in various industries. A motor generally includes a stator assembly and a connector. The stator assembly is provided with coils, and a varying magnetic field is generated after the coils of the stator assembly are energized. When a rotor assembly with magnetism is provided in the energized stator assembly, the stator assembly drives the rotor assembly to rotate continuously through the varying magnetic field. The connector includes terminals. The coils on the stator assembly are connected to the terminals of the connector through a control board or a copper busbar. The terminals of the connector are adapted to be connected to an external application terminal.

In the related art, the connector is usually a separate component. During assembly of the motor, it is necessary to connect the terminals of the connector to a wiring terminal of the stator through a PCB control board or a copper busbar. It is also necessary to connect a housing of the connector to a casing of the motor by welding, snapping, bolting, or the like. In addition, a sealing problem between the connecting components needs to be solved. The motor suffers from a complex structure, low reliability, and relatively intricate assembly processes.

### SUMMARY

To this end, the present disclosure proposes a motor. A coil winding can be electrically connected to an external application terminal directly through a wiring terminal, simplifying a structure of the motor. A housing of the stator assembly and a housing of the connector are integrally formed as one piece, which eliminates original assembly processes such as welding, snapping, and bolting between the connector and the stator housing, and reduces the cost of the motor.

The present disclosure further proposes a water pump including the motor as described above.

The present disclosure further proposes a vehicle including the water pump as described above.

The motor according to an embodiment of the present disclosure includes: a stator assembly including a stator core, an insulation frame, and a coil winding, the insulation frame being disposed at the stator core, and the coil winding being wound around the insulation frame; a plurality of connector terminals, in which in the axial direction of the stator core, the plurality of connector terminals are arranged at an end surface of the insulation frame, and each of the plurality of connector terminals is provided with an external connection end, wherein at least one or more connector terminals of the plurality of connector terminals are each a wiring terminal electrically connected to the coil winding; and a casing including a first part and a second part that are formed as one piece. The first part encloses the stator assembly, the second part encloses the plurality of connector terminals and defines an insertion groove, and the external connection end is located in the insertion groove.

With the motor according to the embodiment of the present disclosure, the coil winding may be electrically connected to the external application terminal directly through the wiring terminals, without the need for transition members such as a control board or a copper busbar for connection transfer, simplifying a structure of the stator assembly and reducing the cost of the stator assembly. Moreover, the housing of the stator assembly (i.e., the first part) and the housing of the connector (i.e., the second part) are integrally formed as one piece. Compared with the related art, the motor provided by the present disclosure eliminates a process of connecting the housing of the stator assembly and the housing of the connector, which not only reduces assembly difficulty of the motor, but also lowers its cost.

Optionally, the first part has a mounting cavity defined in the first part. The mounting cavity is located at a radial inner side of the stator assembly and configured to mount a rotor assembly, and the rotor assembly is coupled and fitted with the stator assembly.

Optionally, the mounting cavity has a mounting opening configured to mount the rotor assembly. The mounting opening is located at a side of the first part facing away from the insertion groove.

Optionally, the mounting cavity has a mounting opening configured to mount the rotor assembly; an outer surface of a supporting side wall, directly facing the mounting opening, of the mounting cavity is provided with a reinforcing protrusion protruding from the outer surface of the supporting side wall; the supporting side wall has a second mounting groove extending into the reinforcing protrusion; and an end portion of a rotation shaft fitted with the rotor assembly is located in the second mounting groove.

Optionally, the casing further includes a reinforcing rib disposed between the reinforcing protrusion and an outer side wall of the first part.

Optionally, the casing further includes a fixing portion formed as one piece with the first part or the second part. The fixing portion has a mounting hole.

Optionally, the fixing portion is configured as an annular structure sleeved over an outside of the first part, and an extending direction of the mounting hole is parallel to an axial direction of the stator assembly.

Optionally, an outer surface of the second part is provided with a snap-fitting protrusion adapted to be snapped with an external application terminal.

Optionally, the casing has an insert hole formed in an outer peripheral wall of the casing, and the motor further includes a blocking member. The insert hole is blocked by the blocking member.

Optionally, the casing has a sealing groove arranged around the insert hole. The sealing groove is in communication with the insert hole, and a part of the blocking member is located in the sealing groove.

Optionally, the blocking member is a sealant layer.

Optionally, the sealing groove includes a recessed portion and a communication portion. The recessed portion is recessed towards an interior of the casing and spaced apart from the insert hole, and the recessed portion is in communication with the insert hole via the communication portion.

Optionally, the plurality of connector terminals further include a grounding terminal electrically connected to the stator core.

Optionally, the stator core has an insertion groove, and the grounding terminal is inserted in the insertion groove.

Optionally, the grounding terminal further includes a second position-limiting surface facing the stator core. The second position-limiting surface abuts against the insulation frame to limit displacement of the insertion portion in the axial direction of the stator core.

Optionally, the insulation frame further includes a position-limiting stop plate abutting against the grounding terminal to limit displacement of the grounding terminal in a radial direction of the stator core.

Optionally, the coil winding is provided with a plurality of wire connection ends located at the insulation frame, and each of the wiring terminals includes a wire clamping portion having a first wire clamping slot configured to receive a corresponding one of the plurality of wire connection ends. The wire clamping portion is at least partially adapted to be electrically connected to the wire connection end by piercing an outer covering layer of the wire connection end.

Optionally, the insulation frame is provided with a mounting protrusion, and a first mounting groove is formed in the mounting protrusion. The plurality of wire connection ends extend into the first mounting groove, and the wire clamping portion extends into the first mounting groove to pierce the outer covering layer.

Optionally, the wiring terminal is provided with an abutting portion abutting against an end surface of the mounting protrusion to limit displacement of the wiring terminal in the axial direction of the stator core.

The water pump according to an embodiment of the present disclosure includes: a pump housing, in which an inner cavity is partially or entirely defined by the pump housing, and the pump housing further has a liquid inlet and a liquid outlet that are in communication with the inner cavity; an impeller rotatably disposed in the inner cavity; and the motor in the above technical solution. The motor includes a rotor assembly in a transmission connection with the impeller.

Optionally, the inner cavity is defined between the pump housing and the casing; and the first part defines a mounting cavity configured to mount the rotor assembly and a mounting opening in communication with the mounting cavity. The mounting opening is in communication with the inner cavity.

The vehicle according to an embodiment of the present disclosure includes the water pump in the above technical solutions.

Additional aspects and advantages of the present disclosure will be provided in part in the following description, or will become apparent in part from the following description, or can be learned from practicing of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings, in which:
FIG. 1 is a schematic view of a water pump according to an embodiment of the present disclosure;
FIG. 2 is a partial cross-sectional view of a water pump according to some embodiments of the present disclosure;
FIG. 3 is a top view of a water pump according to an embodiment of the present disclosure;
FIG. 4 is a partial cross-sectional view of a water pump according to other embodiments of the present disclosure;
FIG. 5 is a schematic enlarged view of Part A in FIG. 4;
FIG. 6 is a schematic view of a stator assembly;
FIG. 7 is a front view of a stator assembly;
FIG. 8 is a partial cross-sectional view of a stator assembly;
FIG. 9 is a schematic structural view of a wiring terminal;
FIG. 10 is a schematic structural view of a grounding terminal; and
FIG. 11 is a schematic view of a vehicle according to an embodiment of the present disclosure.

Reference numerals: 100, motor; 200, water pump; 300, vehicle; 1, stator assembly; 11, stator core; 111, yoke portion; 112, insertion groove; 12, insulation frame; 121, wire winding portion; 122, mounting protrusion; 1221, first mounting groove, 12211, sub-groove; 1222, first avoidance groove; 123, position-limiting stop plate; 13, coil winding; 131, wire connection end; 14, positioning groove; 2, connector terminal; 21, external connection end; 22, wiring terminal; 221, wire clamping portion; 2211, first wire clamping slot; 2212, snap-fitting block; 222, abutting portion; 23, grounding terminal; 231, insertion portion; 232, second position-limiting surface; 3, housing; 31, first part; 311, insert hole; 312, sealing groove; 3121, recessed portion; 3122, communication portion; 3123, second side wall; 3124, fourth side wall; 313, mounting cavity; 3131, supporting side wall; 314, reinforcing protrusion; 315, reinforcing rib; 316, second mounting groove; 317, fixing portion; 3171, mounting hole; 318, snap protrusion; 32, second part; 321, insertion groove; 4, blocking member; 41, main body portion; 42, sealing portion; 421, first side wall; 422, third side wall; 5, pump housing; 51, liquid inlet; 52, liquid outlet; 6, rotor assembly; 7, rotation shaft.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present disclosure.

In the description of the present disclosure, it should be understood that, terms such as "center", "longitudinal", "lateral", "length", "width", "thickness", "over", "below", "front", "back", "left", "right", "vertical", "horizontal", "top", "bottom", "in", "out", "clockwise", "counterclockwise", "axial", "radial", "circumferential", etc., is based on the orientation or position relationship shown in the drawings, and is only for the convenience of describing the present disclosure and simplifying the description, rather than indicating or implying that the associated device or element must have a specific orientation, or be constructed and operated in a specific orientation, and therefore cannot be understood as a limitation to the present disclosure. In addition, features associated with "first" and "second" may include at least one or more such features, either explicitly or implicitly. In the description of the present disclosure, "a plurality of" means two or more, unless otherwise specifically defined.

In the description of the present disclosure, it should be noted that, unless expressly stated or limited otherwise, the terms "mounted", "connected", "coupled" shall be understood in a broad sense. For example, it may be a fixed connection, a detachable connection or an integral connection; it may be a mechanical connection or an electrical connection; it may be a direct connection or an indirect connection through an intermediate medium; it may also be internal communication between two elements. For those skilled in the art, the specific meaning of the above-mentioned terms in the embodiments of the present disclosure can be understood according to specific circumstances.

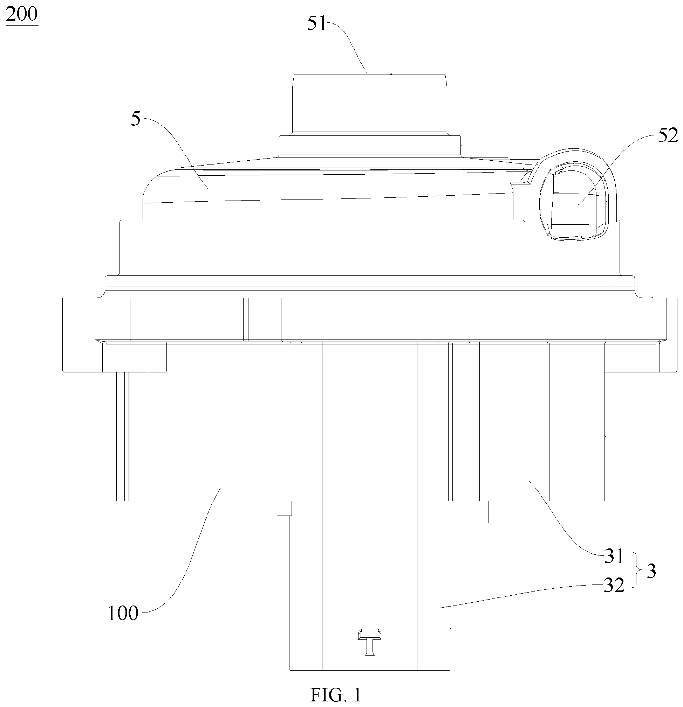

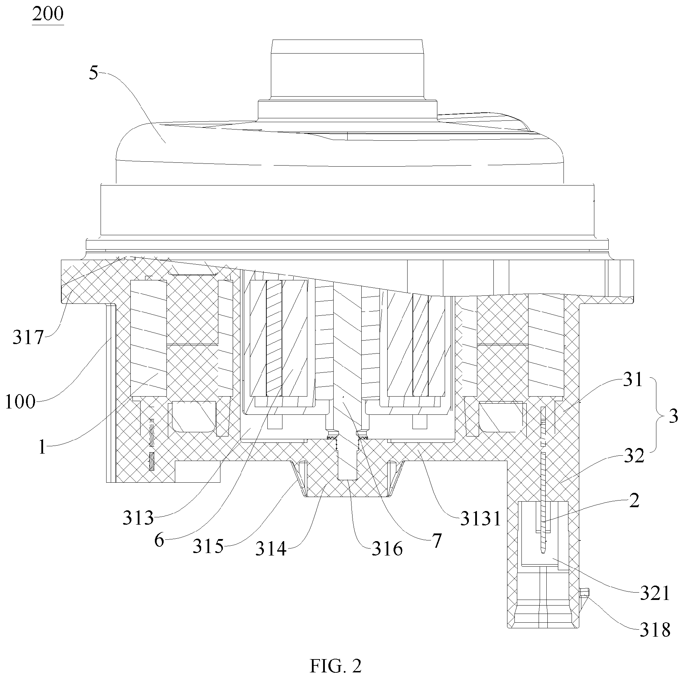

A motor 100 according to the embodiments of the present disclosure will be described below with reference to FIG. 1 to FIG. 11.

Referring to FIG. 1, FIG. 2, and FIG. 6, the motor 100 according to an embodiment of the present disclosure includes a stator assembly 1. The stator assembly 1 includes a stator core 11, an insulation frame 12, and a coil winding 13. The stator core 11 includes a yoke portion 111 and a plurality of tooth portions disposed on the yoke portion 111. The insulation frame 12 is disposed at the stator core 11, and includes a plurality of wire winding portions 121 that are in one-to-one correspondence with the plurality of tooth portions. Moreover, each wire winding portion 121 is sleeved over an outside of a corresponding one of the tooth portions. The coil winding 13 is formed by winding a conducting wire on the wire winding portion 121 of the insulation frame 12. When the coil winding 13 is energized, a magnetic field is generated in the stator assembly 1.

The motor 100 in the embodiment of the present disclosure further includes a plurality of connector terminals 2. The plurality of connector terminals 2 are arranged at an end surface of the insulation frame 12 in an axial direction of the stator core 11. Moreover, in the axial direction of the stator core 11, each of the plurality of connector terminals 2 is provided with an external connection end 21 configured to be connected to an external application terminal. At least some of the plurality of connector terminals 2 are wiring terminals 22 electrically connected to the coil winding 13. That is, the coil winding 13 may be electrically connected to the external application terminal directly through the wiring terminals 22, without the need for transition members such as a control board or a copper busbar for connection transfer, simplifying a structure of the stator assembly 1 and reducing the cost of the stator assembly 1. The motor 100 in the embodiment of the present disclosure further includes a casing 3. The casing 3 includes a first part 31 and a second part 32 that are integrally formed. The first part 31 encloses the stator assembly 1, and the second part 32 encloses the plurality of connector terminals 2. The second part 32 further defines an insertion groove 321. When the motor 100 is connected to the external application terminal, the external application terminal is at least partially located in the insertion groove 321 to be electrically connected to the connector terminals 2. The external application terminal supplies power to the motor, and energizes the coil winding 13 through the wiring terminals 22, so that a magnetic field is generated in the stator assembly 1.

With the motor 100 according to the embodiment of the present disclosure, the coil winding 13 can be electrically connected to the external application terminal directly through the wiring terminals 22, without the need for transition members such as a control board or a copper busbar for connection transfer, simplifying the structure of the stator assembly 1 and reducing the cost of the stator assembly 1. Moreover, a housing of the stator assembly 1 (i.e., the first part 31) and a housing of the connector (i.e., the second part 32) are integrally formed. Compared with the related art, the motor 100 provided by the present disclosure eliminates a process of connecting the housing of the stator assembly 1 and the housing of the connector, which not only reduces assembly difficulty of the motor 100, but also lowers the cost of the motor 100.

In some embodiments, the insulation frame 12 and the stator core 11 are integrally formed into one piece through injection molding. In other embodiments, the insulation frame 12 may also be inserted or bonded to the stator core 11. Other arrangements are also possible, as long as the insulation frame 12 is disposed at the stator core 11.

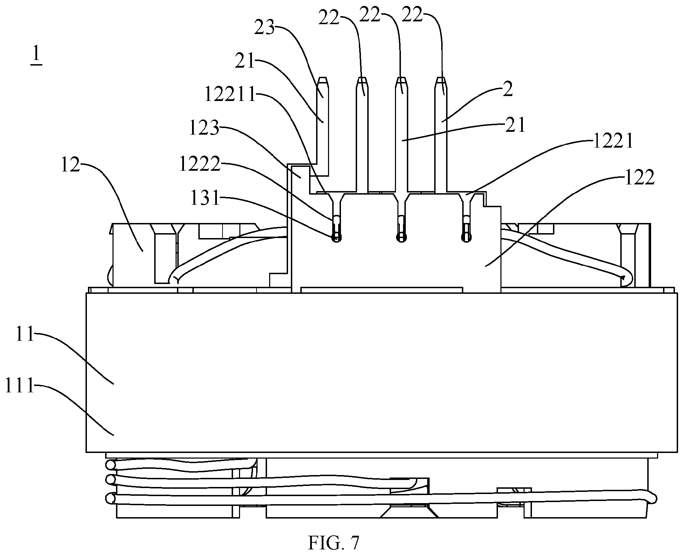

Referring to FIG. 7, FIG. 8, and FIG. 9, in some embodiments, the coil winding 13 is provided with a plurality of wire connection ends 131, each of which is configured to be electrically connected to the wiring terminal 22. The plurality of wire connection ends 131 are all located at the insulation frame 12 to facilitate their connection with the wiring terminals 22. The coil winding 13 is formed by winding a conducting wire. The conducting wire includes a conductive portion and an outer covering layer wrapped around a periphery of the conductive portion. Therefore, in order to realize the electrical connection between the wire connection ends 131 of the coil winding 13 and the wiring terminals 22, the outer covering layer of the wire connection ends 131 needs to be stripped off. The wiring terminal 22 in the embodiment of the present disclosure includes a wire clamping portion 221 having a first wire clamping slot 2211 configured to receive each of the plurality of wire connection ends 131. The wire clamping portion 221 is at least partially adapted to be electrically connected to the wire connection end 131 by piercing an outer covering layer of the wire connection end 131 That is, when the wire connection end 131 enters the first wire clamping slot 2211, the wire clamping portion 221 may pierce the outer covering layer of the wire connection end 131, so that the conductive portion of the wire connection end 131 is electrically connected to the wire clamping portion 221.

In the above technical solution, the wiring terminal 22 can pierce the outer covering layer of the wire connection end 131 by means of the wire clamping portion 221 to be electrically connected to the wire connection end 131, which reduces the difficulty of the electrical connection between the coil winding 13 and the wiring terminal 22, and further reduces the cost of the stator assembly 1.

In some other embodiments, the connection manner between the wiring terminal 22 and the wire connection end 131 may also be welding, bonding, or other suitable means.

In some embodiments, the insulation frame 12 is provided with a mounting protrusion 122, and a first mounting groove 1221 is formed in the mounting protrusion 122. The plurality of wire connection ends 131 each extend into the first mounting groove 1221, and the wire clamping portion 221 extends into the first mounting groove 1221 to pierce the outer covering layer.

In the above technical solution, the wire connection end 131 extends into the first mounting groove 1221, which limits a position of the wire connection end 131, enables the wire clamping portion 221, when inserted into the first mounting groove 1221, to pierce the outer covering layer of the wire connection ends 131. In this way, convenience of the electrical connection between the coil winding 13 and the wiring terminals 22 is further improved. Moreover, in the embodiment of the present disclosure, the mounting protrusion 122 is disposed at the end surface of the insulation frame 12 in the axial direction of the stator core 11, and the first mounting groove 1221 is formed at an end surface of the mounting protrusion 122 in the axial direction of the stator core 11. The wiring terminal 22 can remain extending in the axial direction of the stator assembly 1 upon insertion into the first mounting groove 1221, without performing a pre-bending treatment on the wiring terminal 22, thus reducing processes and lowering the cost of the motor 100.

In some further embodiments, the first mounting groove 1221 is configured as a plurality of sub-grooves 12211 arranged at intervals, and the plurality of wire connection ends 131 extend into the plurality of sub-grooves 12211 in one-to-one correspondence.

Since the plurality of wire connection ends 131 correspond to a plurality of different phase lines respectively, in the above solution, the plurality of wire connection ends 131 extend into the plurality of sub-grooves 12211 in one-to-one correspondence, to distinguish the phase lines corresponding to different wire connection ends 131. Moreover, the plurality of sub-grooves 12211 are arranged at intervals, which effectively reduces a possibility of an electrical connection occurring between the different wire connection ends 131. The plurality of sub-grooves 12211 arranged at intervals also facilitates independent mounting of the plurality of wiring terminals 22, further reducing assembly difficulty of the stator assembly 1.

In some specific embodiments, the mounting protrusion 122 has a first avoidance groove 1222 formed at a portion of the mounting protrusion 122 corresponding to each sub-groove 12211. The first avoidance groove 1222 is configured to allow the wire connection ends 131 to extend through. The first avoidance groove 1222 is in communication with the corresponding sub-groove 12211, and extends through two opposite side walls of the corresponding sub-groove 12211. The wire connection end 131 is located in the corresponding one of the first avoidance grooves 1222, which limits the positions of the wire connection end 131. In this way, the wire clamping portion 221, when inserted into the corresponding sub-groove 12211, pierces the outer covering layer of the wire connection ends 131.

In some embodiments, the wiring terminal 22 is provided with an abutting portion 222 abutting against an end surface of the mounting protrusion 122 to limit displacement of the wiring terminal 22 in the axial direction of the stator core 11. When the wiring terminal 22 is mounted at the first mounting groove 1221, abutment of the abutting portion 222 against an end portion of the mounting protrusion 122 indicates that the wiring terminal 22 is mounted in place, which improves mounting accuracy and stability of the wiring terminal 22.

In some specific embodiments, the abutting portion 222 of the wiring terminal 22 is disposed between the external connection end 21 and the wire clamping portion 221, and is adapted to abut against the end surface of the mounting protrusion 122 where the first mounting groove 1221 is formed.

In some embodiments, the wire clamping portion 221 is detachably fitted with the first mounting groove 1221. When a problem occurs in the connection between the wire clamping portion 221 and the wire connection end 131, the wire clamping portion 221 may be detached from the first mounting groove 1221 for inspection, which facilitates assembly and maintenance of the stator assembly 1.

In some embodiments, the wire clamping portion 221 is provided with a first position-limiting member, and the first mounting groove 1221 is internally provided with a second position-limiting member. The first position-limiting member is engaged with the second position-limiting member. During the process of mounting the wiring terminal 22 into the first mounting groove 1221, while the abutting portion 222 abuts against the end portion of the mounting protrusion 122, the first position-limiting member is engaged with the second position-limiting member, to fix the wiring terminal 22 to the mounting protrusion 122, effectively improving the stability of the wiring terminal 22.

In some specific embodiments, the first position-limiting member is configured as a snap-fitting block 2212 disposed at a peripheral side of the wire clamping portion 221. The second position-limiting member is a first position-limiting surface formed at an inner wall of the first mounting groove 1221. The first position-limiting surface faces a side away from an opening of the first mounting groove 1221. When the snap-fitting block 2212 abuts against the first position-limiting surface, the wiring terminal 22 is restricted from disengaging from the first mounting groove 1221, effectively improving the stability of the wiring terminal 22.

In some embodiments, the wire clamping portion 221 is fitted into the first mounting groove 1221 through the engagement between the first position-limiting member and the second position-limiting member. In other embodiments, the wire clamping portion 221 may also be detachably fitted with the first mounting groove 1221 by a screw, or in other manners, as long as the wire clamping portion 221 is detachably fitted with the first mounting groove 1221.

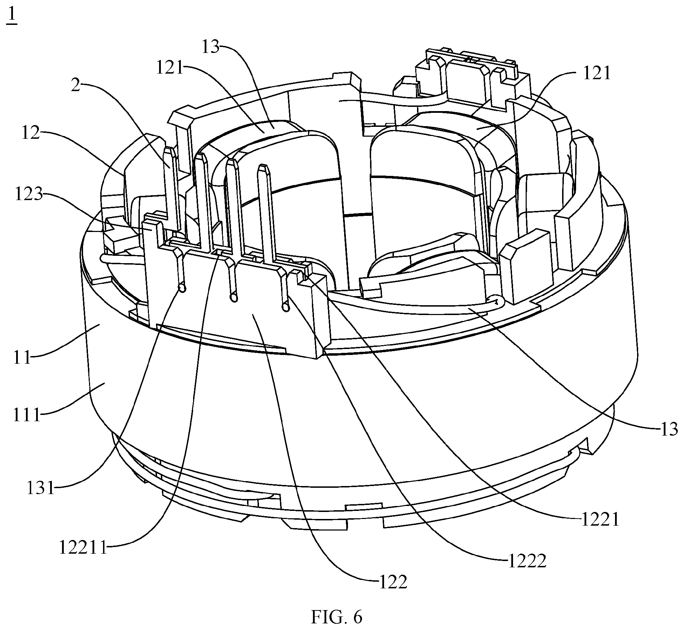

Referring to FIG. 6, FIG. 8, and FIG. 10, in some embodiments, the plurality of connector terminals 2 further include a grounding terminal 23 electrically connected to the stator core 11, to improve use safety of the stator assembly 1.

In some embodiments, the stator core 11 has an insertion groove 112, and the grounding terminal 23 has an insertion portion 231 inserted into the insertion groove 112, to realize the electrical connection between the stator core 11 and the grounding terminal 23 and improve the connection stability between the stator core 11 and the grounding terminal 23.

In some specific embodiments, a part of the insulation frame 12 covers a side of the stator core 11 where the insertion groove 112 is formed. The insertion portion 231 extends through the insulation frame 12 and is inserted into the insertion groove 112, and is in an interference fit with the insertion groove 112.

In some embodiments, the grounding terminal 23 further includes a second position-limiting surface 232 facing the stator core 11. The second position-limiting surface 232 abuts against the insulation frame 12 to limit displacement of the insertion portion 231 in the axial direction of the stator core 11.

During the insertion of the insertion portion 231 into the insertion groove 112, the abutment of the second position-limiting surface 232 against the insulation frame 12 indicates that the grounding terminal 23 is mounted in place, which improves mounting accuracy of the grounding terminal 23.

In some specific embodiments, a part of the grounding terminal 23 is bent to form the second position-limiting surface 232 facing the mounting protrusion 122, and the second position-limiting surface 232 abuts against the mounting protrusion 122.

In some embodiments, the insulation frame 12 further includes a position-limiting stop plate 123. The position-limiting stop plate 123 abuts against the grounding terminal 23 to limit displacement of the grounding terminal 23 in a radial direction of the stator core 11, further improving stability of the grounding terminal 23.

In some specific embodiments, at least two position-limiting stop plates 123 are provided. The two position-limiting stop plates 123 are spaced apart from each other in the radial direction of the stator core 11, and are distributed at two sides of the grounding terminal 23, thereby limiting a movement of the grounding terminal 23 towards a radial inner side or radial outer side of the stator core 11.

In some embodiments, the plurality of connector terminals 2 include a plurality of wiring terminals 22 and one grounding terminal 23. The external connection ends 21 of the plurality of wiring terminals 22 and an external connection end 21 of the grounding terminal 23 are arranged at equal intervals, to facilitate cooperation between the plurality of external connection ends 21 and the external application terminal.

In some embodiments, the coil winding 13 includes a U-phase wire connection end, a V-phase wire connection end, and a W-phase wire connection end. The plurality of sub-grooves 12211 of the mounting protrusion 122 include a U-phase groove, a V-phase groove, and a W-phase groove. The plurality of wiring terminals 22 include a U-phase terminal, a V-phase terminal, and a W-phase terminal. The U-phase wire connection end is located in the U-phase groove and connected to the U-phase terminal. The V-phase wire connection end is located in the V-phase groove and connected to the V-phase terminal. The W-phase wire connection end is located in the W-phase groove and connected to the W-phase terminal.

Positions, extending directions, and arrangement of the plurality of connector terminals 2 are all designed based on a connector model of the external application terminal, so that the plurality of connector terminals 2 of the motor can be connected with the connector of the external application terminal. Since different external application terminals may have different connector models, which have different terminal spacing requirements and different sequence definitions of the three-phase terminals and the grounding terminal, the arrangement of the plurality of connector terminals 2 of the motor of the present disclosure may be different in different embodiments. For example, in an embodiment of the present disclosure, the plurality of connector terminals 2 are arranged in a straight, parallel line with an arrangement sequence of U, V, W, ground, and a spacing of 4 mm between adjacent connector terminals 2. In other embodiments, the arrangement sequence of the plurality of connector terminals 2 may also be U, W, V, ground; or U, W, ground, V.

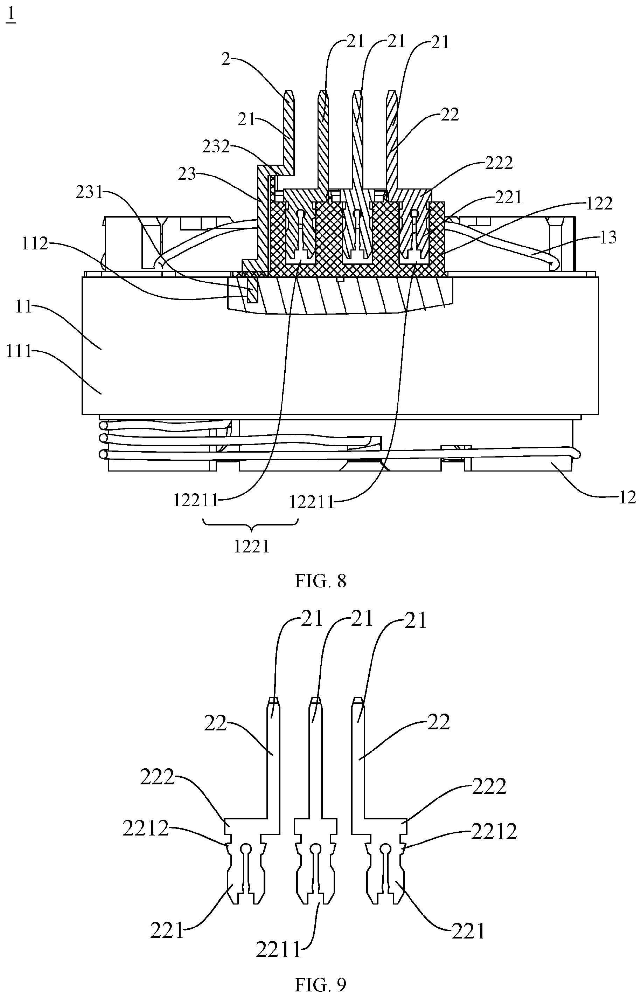

Referring to FIG. 8, in some embodiments, the plurality of connector terminals 2 are arranged at an end surface of the insulation frame 12 in an axial direction of the stator core 11, and each of the plurality of connector terminals 2 is provided with an external connection end 21. The external connection ends 21 of the plurality of connector terminals 2 each extend in the axial direction of the insulation frame 12, so that an external application terminal can be connected to the motor 100 in an axial direction of the motor 100.

In some other embodiments, the plurality of connector terminals 2 are all disposed at an end surface of the insulation frame 12 in an axial direction of the stator core 11, and each connector terminal 2 is provided with an external connection end 21. The connector terminal 2 is generally in an L shape. A part of the connector terminal 2 is mounted at the insulation frame 12, and the external connection end 21 of the connector terminal 2 extends in a radial direction of the insulation frame 12, so that the external application terminal may be connected to the motor 100 in a radial direction of the motor 100.

Referring to FIG. 1, FIG. 2, and FIG. 3, in some embodiments, a mounting cavity 313 is formed in the first part 31. The mounting cavity 313 is located at a radial inner side of the stator assembly 1 and configured to mount a rotor assembly 6. The rotor assembly 6 is coupled and fitted with the stator assembly 1. When the rotor assembly 6 is mounted in the mounting cavity 313, the stator assembly 1 may be connected to the external application terminal through the plurality of connector terminals 2, so that a varying magnetic field is generated inside the stator assembly 1 to drive the rotor assembly 6 to rotate.

In the above technical solution, the first part 31 has a mounting cavity 313 configured to mount the rotor assembly 6, to protect the rotor assembly 6 inside the first part 31, thus avoiding an effect of an external object on the rotor assembly 6 and improving rotation stability of the rotor assembly 6. The rotor assembly 6 may also be supported by an inner wall of the mounting cavity 313, reducing mounting difficulty of the rotor assembly 6.

In some specific embodiments, the mounting cavity 313 has an mounting opening configured to mount the rotor assembly 6, and the mounting opening is located at a side of the first part 31 facing away from the insertion groove 321, so that a power output end of the motor 100 is also located at the side of the first part 31 facing away from the insertion groove 321.

In the above technical solution, the mounting opening is formed at the side of the first part 31 facing away from the insertion groove 321, so that a circuit connection end and the power output end of the motor 100 are distributed at two ends of the motor 100 in the axial direction of the motor 100 without mutual interference between the circuit connection end and the power output end, improving use convenience of the motor 100.

Referring to FIG. 1, FIG. 2, and FIG. 3, in some further embodiments, an inner wall of the mounting cavity 313 directly facing the mounting opening is a supporting side wall 3131. An outer surface of the supporting side wall 3131 is provided with a protruding reinforcing protrusion 314. A strength of the supporting side wall 3131 is enhanced by the reinforcing protrusion 314 to ensure firmness of the supporting side wall 3131. The supporting side wall 3131 has a second mounting groove 316 formed at a side of the supporting side wall 3131 facing the mounting opening. The second mounting groove 316 is formed to extend in the reinforcing protrusion 314. An end portion of a rotation shaft 7 fitted with the rotor assembly 6 is located in the second mounting groove 316.

In the above technical solution, by forming the second mounting groove 316 at the inner wall of the mounting cavity 313, the end portion of the rotation shaft 7 may be mounted into the second mounting groove 316, improving stability of the rotor assembly 6. The second mounting groove 316 also extends into the reinforcing protrusion 314 to increase a depth of the second mounting groove 316, further improving stability of the rotation shaft 7 and the rotor assembly 6.

Referring to FIG. 1, FIG. 2, and FIG. 3, in some specific embodiments, the end portion of the rotation shaft 7 is inserted into the second mounting groove 316 and fixedly connected to the supporting side wall 3131, and the rotor assembly 6 is rotatably disposed at the rotation shaft 7. In some other embodiments, the rotor assembly 6 may be fixedly connected to the rotation shaft 7, and the end portion of the rotation shaft 7 is rotatably disposed in the second mounting groove 316.

Referring to FIG. 1, FIG. 2, and FIG. 3, in some embodiments, the casing 3 further includes a reinforcing rib 315 disposed between the reinforcing protrusion 314 and an outer side wall of the first part 31, which further enhances a strength of the casing 3 and ensures use safety of the motor 100.

In some embodiments, the casing 3 further includes a fixing portion 317 integrally formed at the first part 31 or the second part 32. The fixing portion 317 has a mounting hole 3171. The motor 100 can be fixedly connected to an external structure by the fastener extending through the mounting hole 3171, thus enhancing mounting convenience of the motor 100.

Referring to FIG. 1, FIG. 2, and FIG. 3, in some specific embodiments, the fixing portion 317 is configured as an annular structure sleeved over an outside of the first part 31. An extending direction of the mounting hole 3171 is parallel to an axial direction of the stator assembly 1. A plurality of mounting holes 3171 are formed and distributed at intervals in a circumferential direction of the first part 31, to improve connection stability between the motor 100 and the external structure.

Referring to FIG. 1, FIG. 2, and FIG. 3, in some embodiments, an outer surface of the second part 32 is provided with a snap-fitting protrusion 318 adapted to be snapped with an external application terminal. When the motor 100 is connected to the external application terminal, a part of the external application terminal is inserted into the insertion groove 321 to be electrically connected to the plurality of connector terminals 2. At this time, the snap-fitting protrusion 318 at the outer surface of the second part 32 is snapped with the external application terminal, improving connection stability between the motor 100 and the external application terminal.

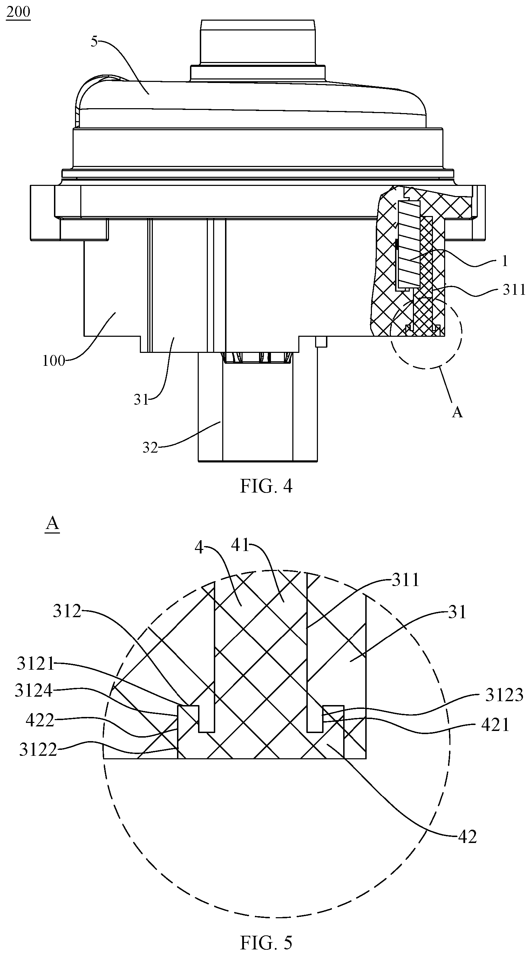

Referring to FIG. 4, FIG. 5, and FIG. 6, in some embodiments, the casing 3 is disposed at the stator assembly 1 and the plurality of connector terminals 2 by injection molding, so that the first part 31 and the second part 32 are integrally formed. During the injection molding of the casing 3, an insert is required to fix the stator assembly 1, and needs to be removed after the injection molding is completed. After the insert is removed, an insert hole 311 is formed on the casing 3. In the embodiment of the present disclosure, the motor 100 further includes a blocking member 4 for blocking the insert hole 311.

In the above technical solution, the insert hole 311 is blocked by the blocking member 4, which reduces a risk of external moisture entering the insert hole 311 and corroding the stator assembly 1, and prolongs a service life of the motor 100.

In some specific embodiments, during the injection molding of the casing 3, the stator assembly 1 is fixed by the insert. After the injection molding is completed, the insert is removed in the axial direction of the stator assembly 1. In this way, the insert hole 311 is formed at an end surface of the casing 3, and is blocked by the blocking member 4. The number of insert holes 311 may be one or more.

In some further embodiments, the casing 3 has a sealing groove 312 arranged around the insert hole 311. The sealing groove 312 is in communication with the insert hole 311, and a part of the blocking member 4 is located in the sealing groove 312.

With the above technical solution, the sealing groove 312 is formed at a peripheral side of the insert hole 311 to lengthen a path for moisture to enter the insert hole 311. A part of the blocking member 4 is located in the sealing groove 312 surrounding the insert hole 311, which further reduces the risk of the external moisture entering the insert hole 311 and corroding the stator assembly 1.

In some specific embodiments, the sealing groove 312 includes a recessed portion 3121 and a communication portion 3122. The recessed portion 3121 is recessed toward an interior of the casing 3 and spaced apart from the insert hole 311. The communication portion 3122 is disposed at a side of the recessed portion 3121 away from the interior of the casing 3. The recessed portion 3121 is in communication with the insert hole 311 via the communication portion 3122. The blocking member 4 includes a main body portion 41 disposed at the insert hole 311 and a sealing portion 42 disposed at the sealing groove 312. The main body portion 41 is connected to the sealing portion 42. The sealing portion 42 has a first side wall 421 facing the main body portion 41. The sealing groove 312 has a second side wall 3123 facing away from the main body portion 41. The first side wall 421 abuts against the second side wall 3123.

The sealing portion 42 further has a third side wall 422 facing away from the main body portion 41. The sealing groove 312 has a fourth side wall 3124 facing the main body portion 41. The third side wall 422 abuts against the fourth side wall 3124.

With the above technical solution, when an operating environment temperature of the motor 100 is high, the blocking member 4 expands when heated, which enhances an abutting effect between the third side wall 422 and the fourth side wall 3124 and improves a sealing effect of the blocking member 4. When the operating environment temperature of the motor 100 is low, the blocking member 4 contracts when cooled, which enhances an abutting effect between the first side wall 421 and the second side wall 3123 and improves the sealing effect of the blocking member 4. Therefore, with the above technical solution, the blocking member 4 can ensure a good sealing effect when the motor 100 is in operating environments of different temperatures.

In some embodiments, the blocking member 4 is configured as a sealant layer. After the insert is removed, the insert hole 311 is formed at the casing 3. A sealant is poured into the insert hole 311 through a potting process. The sealant layer is formed in the insert hole 311 after the sealant cures.

With the above technical solution, connection stability between the blocking member 4 and the casing 3 is improved. Moreover, the blocking member 4 may well fill an internal space of the insert hole 311, effectively ensuring the sealing effect of the blocking member 4. In some other embodiments, the blocking member 4 may also be of other structures, such as a rubber member or a plastic member, which is not limited in the present disclosure, as long as the insert hole 311 can be blocked.

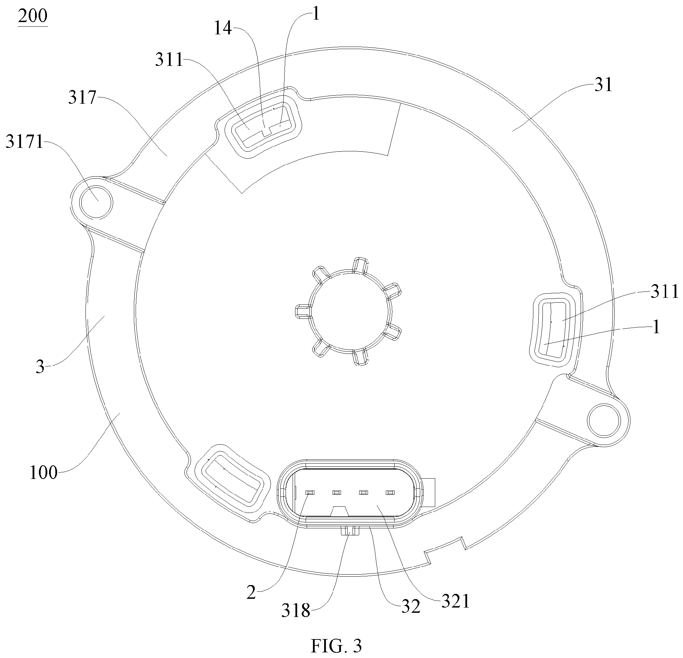

Referring to FIG. 3, in some embodiments, the stator assembly 1 has a positioning groove 14 formed at an outer peripheral wall of the stator assembly 1. The positioning groove 14 is adapted to be fitted with the insert, to facilitate determination of an angle of the stator assembly 1 itself and avoid a case where the angle of the stator assembly 1 does not correspond to an angle of the casing 3 during injection molding.

A water pump 200 according to an embodiment of the present disclosure includes the motor 100 in the above technical solution. The water pump 200 further includes a pump housing 5 and an impeller. An inner cavity is partially or entirely defined by the pump housing 5. The pump housing 5 further has a liquid inlet 51 and a liquid outlet 52 that are in communication with the inner cavity. The impeller is rotatably disposed in the inner cavity. When fluid enters the inner cavity through the liquid inlet 51, the impeller rotates to drive the fluid in the inner cavity to flow towards the liquid outlet 52 for discharge.

The motor 100 includes a stator assembly 1 including a stator core 11, an insulation frame 12, and a coil winding 13. The stator core 11 includes a yoke portion 111 and a plurality of tooth portions disposed on the yoke portion 111. The insulation frame 12 is disposed at the stator core 11 and includes a plurality of wire winding portions 121 in one-to-one correspondence with the plurality of tooth portions. Moreover, each wire winding portion 121 is sleeved over an outside of the corresponding tooth portion. The coil winding 13 is formed by winding a conducting wire on the wire winding portion 121 of the insulation frame 12. When the coil winding 13 is energized, a magnetic field is generated in the stator assembly 1.

The motor 100 further includes a plurality of connector terminals 2 arranged at an end surface of the insulation frame 12 in an axial direction of the stator core 11. Moreover, in the axial direction of the stator core 11, each of the plurality of connector terminals 2 is provided with an external connection end 21 configured to be connected to an external application terminal. At least some of the plurality of connector terminals 2 are wiring terminals 22 electrically connected to the coil winding 13.

The motor 100 further includes a casing 3 including a first part 31 and a second part 32 that are integrally formed. The first part 31 encloses the stator assembly 1, and the second part 32 encloses the plurality of connector terminals 2. The second part 32 further defines an insertion groove 321. When the motor 100 is connected to the external application terminal, the external application terminal is located in the insertion groove 321 and is electrically connected to the connector terminals 2.

The motor 100 includes a rotor assembly 6 coupled and fitted with the stator assembly 1. A mounting cavity 313 is formed in the first part 31. The mounting cavity 313 is located at a radial inner side of the stator assembly 1. The rotor assembly 6 is rotatably disposed in the mounting cavity 313. The rotor assembly 6 is in a transmission connection with the impeller. When the motor 100 is connected to the external application terminal through the plurality of connector terminals 2, the external application terminal supplies power to the stator assembly 1, so that the stator assembly 1 generates a varying magnetic field to drive the rotor assembly 6 to rotate. The rotor assembly 6 drives the impeller to rotate, thus the fluid is driven by the water pump 200 to flow.

With the water pump 200 according to the embodiment of the present disclosure, the coil winding 13 of the motor 100 may be electrically connected to the external application terminal directly through the wiring terminals 22, without the need for transition members such as a control board or a copper busbar for connection transfer, simplifying the structure of the motor 100 and reducing the cost of the water pump 200. Moreover, the housing of the stator assembly 1 and the housing of the connector are integrally formed, which not only reduces the assembly difficulty of the motor 100, but also lowers the cost of the water pump 200.

In some embodiments, the mounting cavity 313 has a mounting opening configured to mount the rotor assembly 6. The mounting opening is located at a side of the first part 31 facing away from the insertion groove 321. The inner cavity is defined between the pump housing 5 and the casing 3, and the pump housing 5 is disposed at the side of the first part 31 facing away from the insertion groove 321. That is, the inner cavity is in communication with the mounting cavity 313 through the mounting opening, to facilitate the connection between the rotor assembly 6 and the impeller.

In some specific embodiments, the rotor assembly 6 and the impeller are integrally formed, which effectively improves the connection stability between the rotor assembly 6 and the impeller.

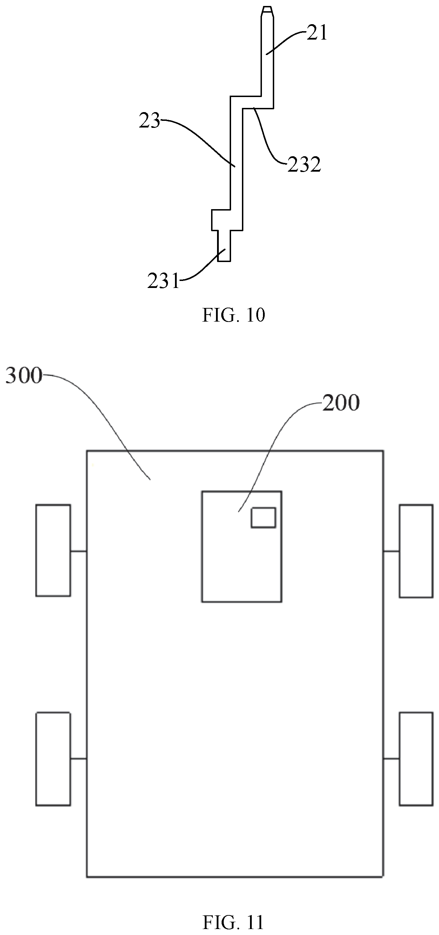

Referring to FIG. 11, a vehicle 300 according to an embodiment of the present disclosure includes the water pump 200 described in the above technical solution. The vehicle 300 may be a new energy vehicle 300. In some embodiments, the new energy vehicle 300 may be a pure electric vehicle 300 using the motor 100 as a main driving power source. In other embodiments, the new energy vehicle 300 may also be a hybrid vehicle 300 using both an internal combustion engine and the motor 100 as main driving power sources. Regarding the internal combustion engine and the motor 100 for providing driving power to the new energy vehicle 300 mentioned in the above embodiments, the internal combustion engine may use gasoline, diesel, hydrogen, or the like as fuel, and the motor 100 may be powered by a power battery, a hydrogen fuel cell, or the like, which are not specifically limited herein. It should be noted that the above descriptions are only exemplary illustrations of a structure of the new energy vehicle 300 and the like, and are not intended to limit the protection scope of the present disclosure.

With the vehicle 300 according to the embodiment of the present disclosure, the coil winding 13 may be electrically connected to the external application terminal directly through the wiring terminals 22, without the need for transition members such as a control board or a copper busbar for connection transfer, simplifying the structure of the motor 100 and reducing the cost of the stator assembly 1. Moreover, the housing of the stator assembly 1 and the housing of the connector are integrally formed, which not only reduces the assembly difficulty of the motor 100, but also lowers the cost of the vehicle 300.

In the description of this specification, descriptions with reference to the terms "an embodiment", "some embodiments", "schematic embodiments", "examples", "specific examples", or "some examples", etc. mean that specific features, structure, materials, or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner.

Although the embodiments of the present disclosure have been shown and described above, it can be understood by those skilled in the art that various changes, modifications, replacements, and variations can be made to these embodiments without departing from the principles and ideas of the present disclosure. The scope of the present disclosure is defined by the claims as attached and their equivalents.

## Claims

1. A motor, comprising:
a stator assembly comprising a stator core, an insulation frame, and a coil winding, the insulation frame being disposed at the stator core, and the coil winding being wound around the insulation frame;
a plurality of connector terminals, wherein in an axial direction of the stator core, the plurality of connector terminals are arranged at an end surface of the insulation frame, and each of the plurality of connector terminals is provided with an external connection end, wherein at least one or more connector terminals of the plurality of connector terminals are each a wiring terminal electrically connected to the coil winding; and
a casing comprising a first part and a second part that are formed as one piece, the first part enclosing the stator assembly, the second part enclosing the plurality of connector terminals and defining an insertion groove, and the external connection end being located in the insertion groove.

2. The motor according to claim 1, wherein the casing has an insert hole formed in an outer peripheral wall of the casing, and wherein the motor further comprises a blocking member, the insert hole being blocked by the blocking member.

3. The motor according to claim 2, wherein the casing has a sealing groove arranged around the insert hole, the sealing groove being in communication with the insert hole, and a part of the blocking member being located in the sealing groove.

4. The motor according to claim 3, wherein the blocking member is a sealant layer.

5. The motor according to claim 4, wherein the sealing groove comprises a recessed portion and a communication portion, the recessed portion being recessed towards an interior of the casing and spaced apart from the insert hole, and the recessed portion being in communication with the insert hole via the communication portion.

6. The motor according to any one of claims 1 to 5, wherein the first part has a mounting cavity defined in the first part, the mounting cavity being located at a radial inner side of the stator assembly and configured to mount a rotor assembly, and the rotor assembly being coupled and fitted with the stator assembly.

7. The motor according to claim 6, wherein the mounting cavity has a mounting opening configured to mount the rotor assembly, the mounting opening being located at a side of the first part facing away from the insertion groove.

8. The motor according to claim 6 or 7, wherein:
the mounting cavity has a mounting opening configured to mount the rotor assembly;
an outer surface of a supporting side wall, directly facing the mounting opening, of the mounting cavity is provided with a reinforcing protrusion protruding from the outer surface of the supporting side wall;
the supporting side wall has a second mounting groove extending into the reinforcing protrusion; and
an end portion of a rotation shaft fitted with the rotor assembly is located in the second mounting groove.

9. The motor according to claim 8, wherein the casing further comprises a reinforcing rib disposed between the reinforcing protrusion and an outer side wall of the first part.

10. The motor according to any one of claims 1 to 9, wherein the casing further comprises a fixing portion formed as one piece with the first part or the second part, the fixing portion having a mounting hole.

11. The motor according to claim 10, wherein:
the fixing portion is configured as an annular structure sleeved over an outside of the first part; and
an extending direction of the mounting hole is parallel to an axial direction of the stator assembly.

12. The motor according to any one of claims 1 to 11, wherein an outer surface of the second part is provided with a snap-fitting protrusion adapted to be snapped with an external application terminal.

13. The motor according to any one of claims 1 to 12, wherein the plurality of connector terminals further comprise a grounding terminal electrically connected to the stator core.

14. The motor according to claim 13, wherein the stator core has an insertion groove, and the grounding terminal has an insertion portion inserted in the insertion groove.

15. The motor according to claim 14, wherein the grounding terminal further comprises a second position-limiting surface facing the stator core, wherein the second position-limiting surface abuts against the insulation frame to limit displacement of the insertion portion in the axial direction of the stator core.

16. The motor according to claim 15, wherein the insulation frame further comprises a position-limiting stop plate configured to abut against the grounding terminal to limit displacement of the grounding terminal in a radial direction of the stator core.

17. The motor according to any one of claims 13 to 16, wherein:
the coil winding is provided with a plurality of wire connection ends located at the insulation frame; and
each of the wiring terminals comprises a wire clamping portion having a first wire clamping slot configured to receive a corresponding one of the plurality of wire connection ends,
wherein at least part of the wire clamping portion is adapted to be electrically connected to the wire connection end by piercing an outer covering layer of the wire connection end.

18. The motor according to claim 17, wherein the insulation frame is provided with a mounting protrusion, a first mounting groove being formed in the mounting protrusion, and
wherein the plurality of wire connection ends extend into the first mounting groove, and the wire clamping portion extends into the first mounting groove to pierce the outer covering layer.

19. The motor according to claim 18, wherein the wiring terminal is provided with an abutting portion abutting against an end surface of the mounting protrusion to limit displacement of the wiring terminal in the axial direction of the stator core.

20. A water pump, comprising:
a pump housing, wherein an inner cavity is partially or entirely defined by the pump housing, and wherein the pump housing further has a liquid inlet and a liquid outlet that are in communication with the inner cavity;
an impeller rotatably disposed in the inner cavity; and
the motor according to any one of claims 1 to 19, the motor further comprising a rotor assembly in a transmission connection with the impeller.

21. The water pump according to claim 20, wherein:
the inner cavity is defined between the pump housing and the casing; and
the first part defines a mounting cavity configured to mount the rotor assembly and a mounting opening in communication with the mounting cavity, the mounting opening being in communication with the inner cavity.

22. A vehicle, comprising the water pump according to claim 20 or 21.
